Europäisches Patentamt

European Patent Office

Office européen des brevets

(11) Numéro de publication: **0 244 543**
**A1**

## (12) DEMANDE DE BREVET EUROPEEN

(21) Numéro de dépôt: 86420117.3

(22) Date de dépôt: 05.05.86

(51) Int. Cl.⁴: **F16H 39/48** , //F16H39/50

(43) Date de publication de la demande:
**11.11.87 Bulletin  87/46**

(84) Etats contractants désignés:
**AT BE CH DE GB IT LI LU NL SE**

(71) Demandeur: **Malfit, Jean**
**"Le Napoléon" 2 Avenue de Chapotte**
**F-07300 Tournon(FR)**

(72) Inventeur: **Malfit, Jean**
**"Le Napoléon" 2 Avenue de Chapotte**
**F-07300 Tournon(FR)**

(74) Mandataire: **Karmin, Roger**
**Cabinet MONNIER 150, cours Lafayette**
**F-69003 Lyon(FR)**

(54) **Transmission hydrostatique de puissance pour véhicule automobile.**

(57) L'invention concerne une transmission hydrostatique de puissance pour véhicule automobile
La transmission assure le passage automatique et continu des rapports de transmission permettant en permanence l'adaptation de la valeur de la puissance absorbée par le déplacement du véhicule à la valeur de la puissance disponible au moteur commandée par la pédale d'accélérateur, en augmentant ou en diminuant le rapport de transmission.
Application : tout véhicule automobile, permettant gain de poids, gain d'énergie, souplesse, sécurité.

Fig 1

## "TRANSMISSION HYDROSTATIQUE DE PUISSANCE POUR VEHICULE AUTOMOBILE"

La présente invention a pour objet une transmission hydrostatique pour véhicule automobile. Cette transmission s'appuie sur l'utilisation du générateur récepteur à engrenages objet de la demande de brevet Français N° 84-06-607 déposée le 22 mai 1984 au nom du présent demandeur pour : "GENERATEUR RECEPTEUR HYDRAULIQUE A HAUTE PRESSION POUR LA TRANSMISSION DE PUISSANCE". Ce générateur récepteur possède un équilibrage hydrostatique intégral sur les faces des engrenages et sur leur denture.Cette transmission permet de très hautes pressions de fonctionnement, et apporte :

-une grande souplesse de conduite par variation continue du rapport de transmission,

-une grande facilité de conduite par suppression de l'embrayage et du freinage classique : une seule pédale est utilisée pour accélérer, ralentir et freiner. La pédale de frein conservée est uniquement utilisée en sécurité,

-un passage possible automatique des rapports de transmission par paliers et un ajustement automatique entre paliers du rapport de transmission pour adapter celui-ci aux conditions de conduite,

-"MARCHE AVANT-MARCHE ARRIERE" sélectionnée par bouton poussoir électrique,

-une plus grande sécurité de conduite en libérant le conducteur des manoeuvres qui occupent son attention : débrayage, changement de vitesse, embrayage, et cela sans action sur pédale d'accélérateur, avec comme seule préoccupation, les problèmes de conduite,

-une économie d'énergie résultant de l'optimisation du rapport de transmission aux conditions de conduite, de la récupération de l'énergie de freinage ou de "descente" par accumulation, de la diminution du poids par élimination ou remplacement d'organes mécaniques lourds,

-une énergie disponible sur le véhicule pour certaines servitudes :

Asservissement de direction

Cric Hydraulique

Suspension

Sur un véhicule, cette transmission peut permettre de supprimer selon les schémas de construction adoptés :

-la boîte de vitesses

-l'embrayage

-Les arbres de transmissions classiques

-le différentiel

-les systèmes de freinage classiques remplacés par un dispositif hydraulique moins lourd

-le frein à main.

Le dessin annexé, donné à titre d'exemple non limitatif, permettra de mieux comprendre les caractéristiques de l'invention.

Figure 1 est un schéma en plan montrant le circuit à variateur hydraulique selon l'invention sur un véhicule à quatre roues motrices.

Figures 2 et 3 montrent des variantes.

Figures 4, 5 et 6 montrent le système de variabilité de la transmission et de marche avant/marche arrière.

Figures 7, 8 et 9 sont les schémas en plan qui correspondent respectivement aux Figures 4, 5 et 6.

Figures 10, 11 et 12 montrent les composants du circuit de commande de la transmission

Figure 13 illustre le dispositif anti-blocage pour les roues du véhicule.

Figure 14 est un graphique montrant le principe de la variation du rapport démultiplicateur.

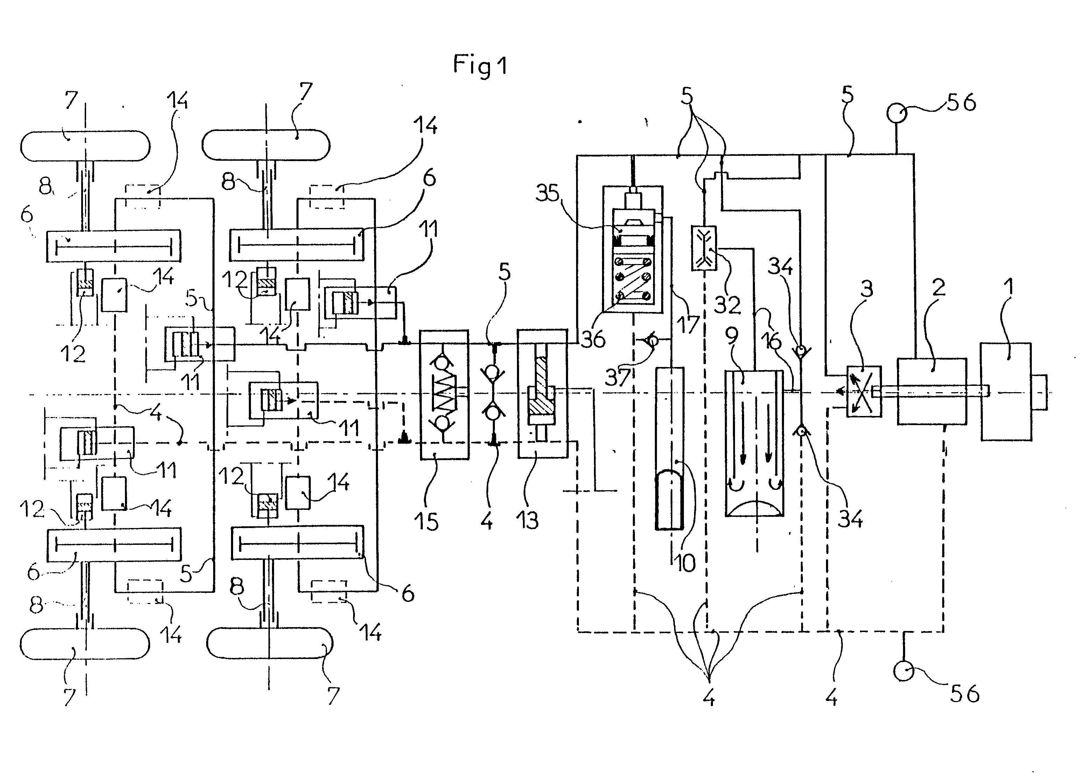

Cette transmission hydrostatique présente les caractéristiques suivantes , (Figure 1) :

A la sortie du moteur thermique 1 et entraînés par celui-ci, un groupe générateur récepteur hydraulique 2 à un ou n étages de cylindrée fixe, type générateur récepteur à compensation hydrostatique intégrale et un générateur récepteur hydraulique 3 à cylindrée variable et à réversibilité totale HP-BP, moteur générateur, l'ensemble cylindrée fixe plus cylindrée variable alimenté par un conduit basse pression BP 4 et délivrant une pression hydraulique par un conduit haute pression HP 5.

Le conduit 5 alimente en HP les générateurs récepteurs à cylindrée fixe 6, de type à compensation hydrostatique intégrale, montés sur le châssis et attaquant chacun respectivement chacune des roues 7 par une liaison arbrée homocinétique 8, la transmission pouvant être soit :

-à deux roues motrices lesquelles peuvant être des roues avant ou arrière

2

0 244 543

-à quatre roues motrices
-à deuxn roues motrices
-à deux, quatre... deuxn roues motrices, chacune de ces combinaisons permettant un étage de la partie fixe du rapport de transmission.

L'ensemble génération 2 et 3 à la sortie du moteur thermique 1, réception 6 sur les roues 7, et les conduits HP-BP 4 et 5 constituent la partie puissance proprement dite de la transmission, en marche avant par le groupe générateur 2 et le générateur 3, en marche arrière par le générateur 3 avec inversion BP-HP dans les conduits 4 et 5, en frein moteur dans les deux cas ci-dessus avec inversion BP-HP et HP-BP dans les conduits 4 et 5.

Cette transmission est complétée par les dispositifs suivants:
-des systèmes de sélection des étages fixes 11 et 12,
-un réservoir hydraulique 9,
-un accumulateur hydraulique 10,
-un dispositif de commande anti-blocage de roues 13 avec système anti-blocage de roue 14,
-un dispositif de surpression HP 15,
-un circuit hydraulique de commande alimenté par les conduits réservoirs 16 toujours basse pression et accumulateur 17 toujours haute pression.

Dans l'exposé de cette étude, les désignations HP ou BP pour les conduits 4 et 5 utilisés pour la transmission de puissance peuvent être BP ou HP selon que le moteur thermique 1 est moteur et le véhicule récepteur ou l'inverse (frein moteur) : seuls les conduits 16 propres au réservoir basse pression 9 et à celui-ci sont toujours BP et les conduits 17 propres à l'accumulation haute pression 10 et à celui-ci sont toujours HP, ces conduits 16 et 17 servant de support au circuit hydraulique de commande de la transmission.

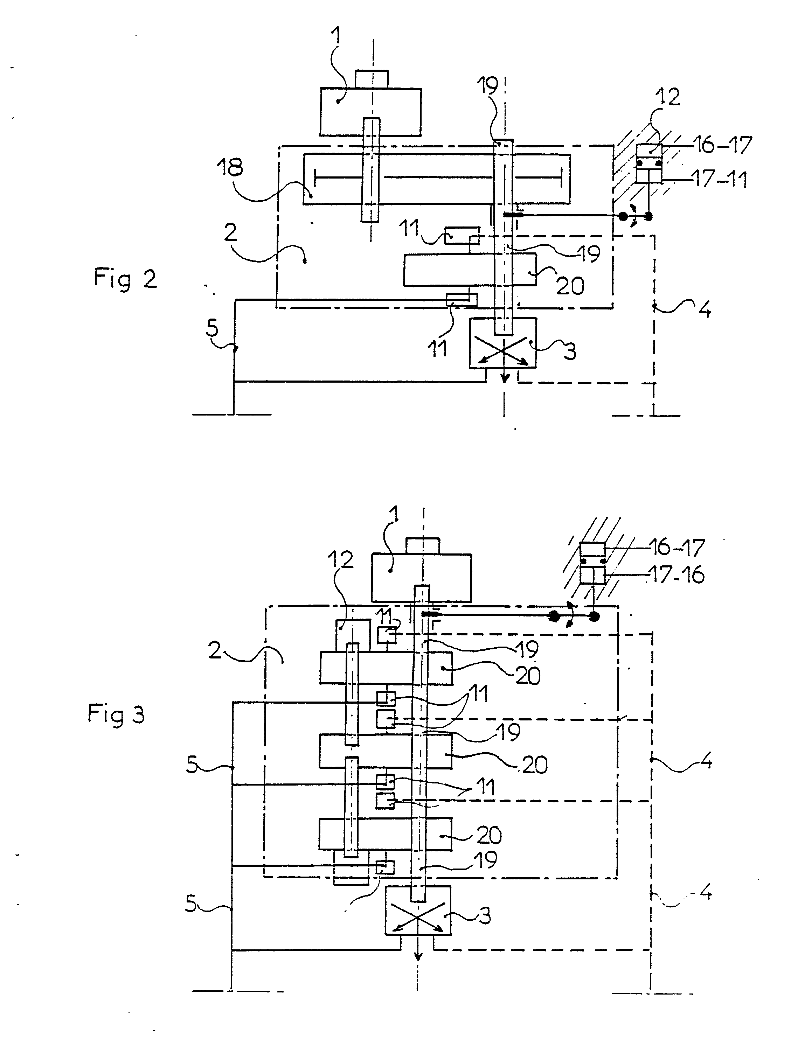

Le groupe générateur récepteur hydraulique 2 à cylindrée fixe est représenté en deux versions Figure 2 et Figure 3.

La version Figure 2 est mi-mécanique, mi-hydraulique. La partie mécanique 18 peut être soit une boîte de vitesses soit un variateur mécanique à évolution par paliers, c'est-à-dire donnant les mêmes résultats que la boîte de vitesses. Cette partie méca nique 18 donne un ou plusieurs rapports possibles, la prise directe étant l'un de ceux-ci, et entraîne un arbre 19 cannelé toujours en prise avec le générateur 3 à débit variable. Cet arbre 19 commandé par le mécanisme et vérin 12 peut embrayer ou débrayer avec le pignon de commande de l'étage générateur récepteur à cylindrée fixe 20, l'alimentation hydraulique de celui-ci par le conduit 4 étant permise par le clapet 11 d'ouverture de conduit 4.

La version Figure 3 est une version totalement hydraulique; l'arbre 19 est toujours en prise avec le générateur récepteur 3 à débit variable. Cet arbre 19 commandé par le mécanisme et vérin 12 peut embrayer ou débrayer avec le pignon de commande de l'étage central generateur récepteur à cylindrée fixe 20, les arbres secondaires 21 commandés par les mécanismes et vérins 12 peuvent embrayer ou débrayer avec les pignons secondaires des étages 20 de part et d'autre de l'étage central, les alimentations hydrauliques des étages par le conduit 4 étant permises par les clapets d'ouverture 11 du conduit 4.

Toutes les versions et combinaisons entre les deux versions ci-dessus sont permises et permettent d'obtenir :
-un ou plusieurs étages à cylindrée fixe V1, V2, V3.......Vn ;
-un étage à cylindrée variable ±αφ dont la variabilité permet la variation du rapport de transmission en démarrage MARCHE AVANT, en démarrage MARCH ARRIERE, et entre les étages.

L'ordre de passage d'un rapport fixe à un autre rapport fixe déclenche les opérations suivantes selon le sens de passage :
-retour du générateur récepteur à débit variable 3 en position moteur débit maxi ou retour du papillon de commande de puissance en position ralenti par l'action d'un vérin sur le câble de commande;
-retour du papillon de commande de puissance du moteur en position ralenti, et ce par action d'un vérin électrique ou hydraulique sur le câble de commande ,
-ouverture des clapets 11 permettant l'alimentation du ou des étages sélectionnés,
-entraînement des pignons du ou des étages sélectionnés du fait de l'alimentation en huile par le conduit 4,
-le débrayage du ou des étages éliminés par les vérins 12,
-la fermeture des clapets 11 du ou des étages éliminés,
-l'embrayage du ou des étages sélectionnés par les vérins 12,
-retour de l'ouverture du papillon de commande de puissance du moteur en position correspondant à la position de la pédale donnée par le pied du conducteur.

3

Toutes ces opérations sont déclenchées à partir de certaines conditions de conduite qui sont :

-la vitesse du véhicule,

-le rapport de transmission,

-la pression hydraulique,

-l'ouverture du papillon d'accélération,

-la position angulaire du barillet du générateur récepteur à débit variable,

et à partir du programme de gestion de la transmission hydrostatique.

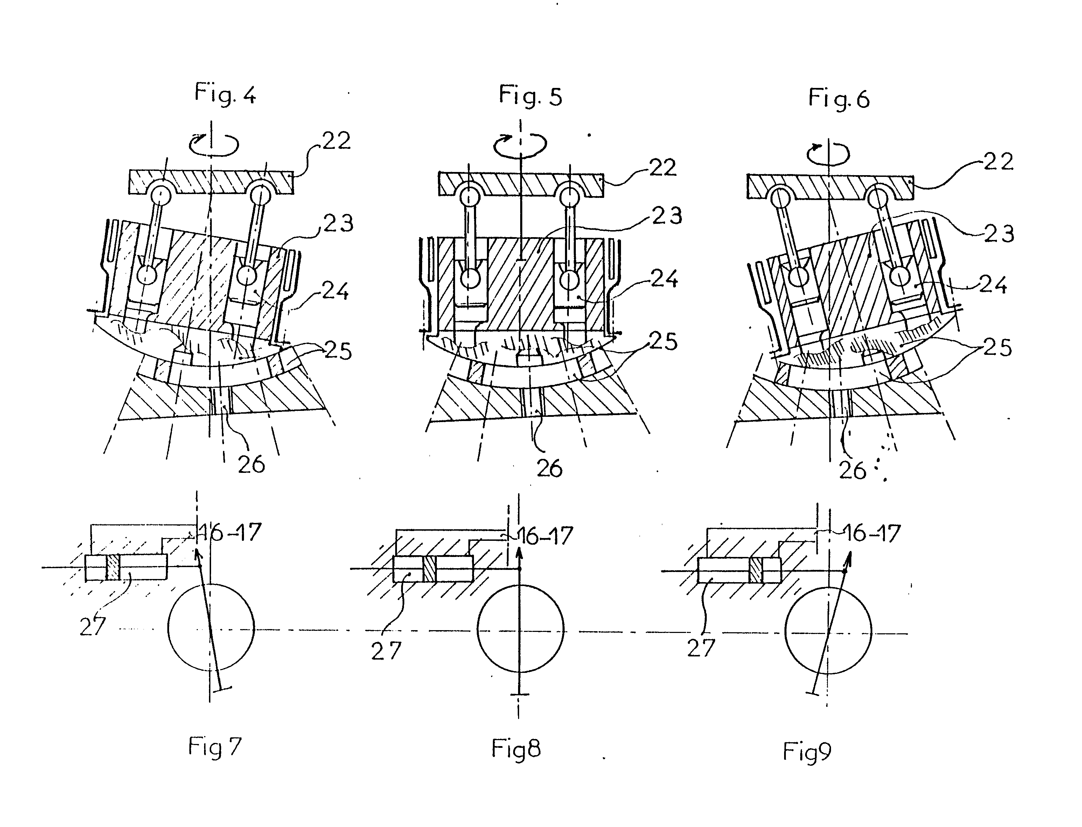

Les Figures 4, 5 et 6 représentent le fonctionnement de l'étage générateur récepteur à cylindrée variable 3.

Celui-ci est du type à barillet à pistons axiaux à angles d'inclinaison variable, constitué par un plateau 22 à palier hydrostatique, par un barillet 23 et des pistons 24, des dispositifs de distribution 25 et des orifices d'entrée sortie 26. L'angle d'inclinaison du barillet est commandé par un vérin 27 piloté par servo-valve ou valves à action proportionnelle.

Compte tenu du sens de rotation indiqué, la Figure 4 représente le fonctionnement en générateur pour l'orifice situé en avant du plan et en moteur pour l'orifice situé en arrière du plan de la figure.

La Figure 5 représente le fonctionnement à débit nul. La figure 6 représente le fonctionnement en moteur pour l'orifice situé en avant du plan et en générateur pour l'orifice situé en arrière du plan de la figure.

Le générateur récepteur à débit variable donne pour un orifice un débit $\pm \alpha \phi$ et pour l'autre orifice un débit $\mp \alpha \phi$ ce qui lui permet avec le même sens de rotation le démarrage du véhicule en marche avant avec variation du rapport, en marche arrière avec la variation du rapport, et la variation du rapport de transmission en marche avant de part et d'autre de chacun des rapports fixes résultant des cylindrées fixes, ce qui permet la variation continue du rapport de transmission (en moteur : $-\alpha \phi$, en générateur : $+\alpha \phi$).

La variabilité de part et d'autre du point 0 permet une variation importante du rapport de transmission pour une inclinaison faible du barillet 23 permettant ainsi le fonctionnement à des pressions très élevées compatibles avec les pressions permises par les étages fixes à engrenages hélicoïdaux et compensation hydrostatique intégrale. Cet exemple est donné pour un générateur récepteur à barillet à pistons axiaux, mais tous les types classiques à débit variable, à pistons radiaux et came, à barillet fixe et plateau came d'inclinaison variable, à palettes, peuvent être utilisés s'ils permettent un dispositif de variation de cylindrée de part et d'autre du point 0 pour un même orifice et pour le même sens de rotation.

L'ensemble réception 6 (Figure 1) est constitué par les générateurs récepteurs de type à compensation hydrostatique intégrale. Pour chaque couple de roues, ils permettent les cylindrées W1, W2, W1 + W2,... Wn... L'enclenchement des étages. deux roues avant, deux roues arrière, quatre roues AV et Ar motrices se fait selon le processus suivant commandé par la consigne de passage d'un rapport fixe à un autre rapport fixe :

-ouverture des clapets 11 permettant l'alimentation du ou des étages sélectionnés, ou fermeture du papillon de puissance, ou action sur variabilité,

-ouverture des clapets 11 permettant l'alimentation du ou des étages sélectionnés,

-entraînement des pignons du ou des étages sélectionnés du fait de l'alimentation en huile par le conduit 5,

-débrayage du ou des étages éliminés par les vérins 12,

-fermeture du ou des étages éliminés par les clapets 11,

-embrayage du ou des étages sélectionnés par les vérins 12.

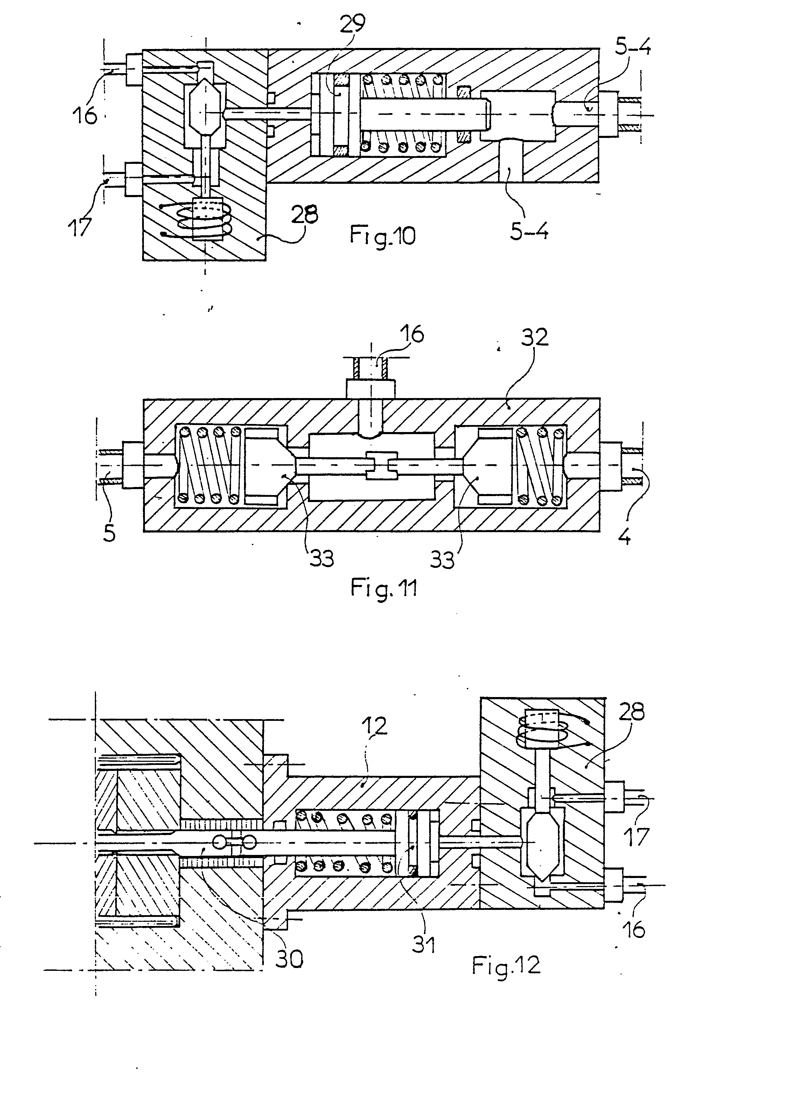

Les dispositifs de sélection des étages fixes clapet 11 et vérin 12 son représentés Figure 10 et Figure 12. La Figure 10 représente le clapet 11 d'ouverture et de fermeture des conduits 4 ou 5 sur le circuit de puissance, 41 sur le circuit de commande anti-blocage de roues. Sur le circuit de puissance, ils sont placés de part et d'autre soit d'un générateur à cylindrée fixe, soit d'un étage récepteur, deux roues, à cylindrée fixe et assurent soit leur isolement , soit leur mise en service . L'electro clapet 28 commande leur ouverture ou leur fermeture par un piston 29, fermeture par haute pression 17, ouverture par ressort et basse pression 16. Les étages bloqués sont ainsi totalement isolés du reste de la transmission par deux clapets 11, un sur le conduit 4 et un sur le conduit 5. Le clapet 11 sur le circuit anti-blocage de roue est actionné pour la marche arrière du véhicule.

La Figure 12 représente le vérin 12 d'embrayage des pignons de l'étage sélectionné ou de débrayage des pignons de l'étage éliminé. L'ouverture des clapets 11 permet l'entraînement des pignons de l'étage à vitesse de synchronisme ou voisine ; l'action de l'électro clapet 28 permet de commander par 17 le piston 31 qui assure l'embrayage de l'arbre 30 avec le pignon de commande de l'étage et avec la roue. L'opération de débrayage est l'opération inverse par l'action du ressort et de la basse pression 16 libérée par l'électro clapet 28, sous couple de transmission nul et à vitesse de synchronisme.

Le réservoir pressurisé 9 est à une pression de l'ordre de 20 bars maintenue par une membrane souple gonflée à l'azote et comporte un dispositif à chicanes permettant le bon renouvellement et refroidissement de l'huile. Ce réservoir 9 et les conduits 16 constituent la partie toujours basse pression BP de la transmission. Le réservoir 9 reçoit l'huile des conduits 4 ou 5 sélectionnés par un clapet préférentiel 32, (Figure 11), le conduit dans lequel règne la plus haute pression sélectionne la liaison du conduit dans lequel règne la basse pression vers le réservoir 9 par les pistons-clapet 33. Les anti-retour 34 permettent la liaison retour du réservoir 9 vers le conduit 4 ou 5 où règne la basse pression.

L'accumulateur hydraulique 10 est gonflé à l'azote et alimente les conduits 17. Le clapet 35 permet la fermeture du circuit HP 17 vis-à-vis du conduit 5 de façon à conserver une certaine pression dans le circuit de commande, celle-ci donnée par le tarage du ressort 36. L'anti-retour 37 permet l'accumulation d'énergie au cours des opérations de freinage et frein moteur.

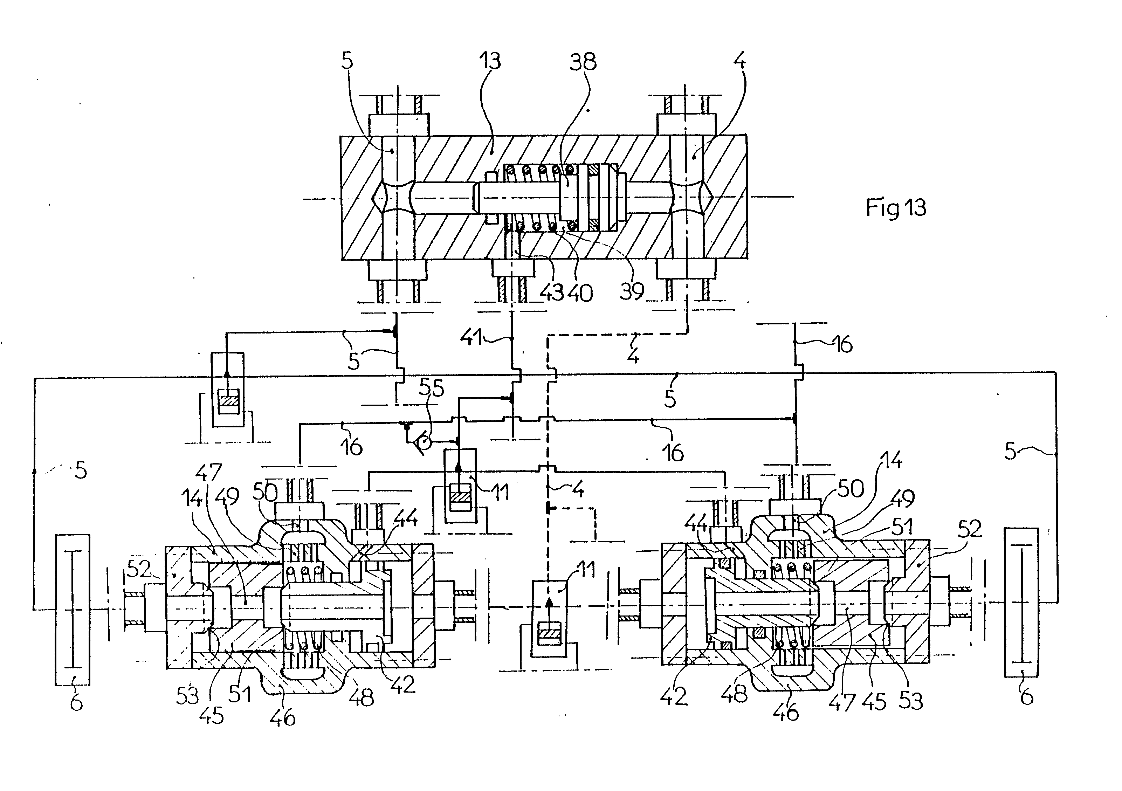

La Figure 13 représente le dispositif de commande anti-blocage des roues 13 avec système anti-blocage de roue 14. Le dispositif 13 consiste en un vérin dont le piston 38 comporte dans la chambre secondaire 39 un ressort antagoniste 40 et est soumis sur sa plus grande section à la pression conduit 4 et sur sa plus petite section à la pression conduit 5. Sous l'action de ces deux pressions et du ressort 40, le piston 38 se déplace en aspirant ou refoulant par le conduit 41 l'huile de la chambre 39 qui va commander le piston de vérin 42 en empruntant les orifices 43 dans le dispositif 13 et 44 dans le système 14.

Le dispositif 13 commande ainsi le système anti-blocage de roue 14 qui fera ainsi également office de débrayage automatique.

Le système 14 consiste en un piston 45 amortisseur de freinage qui peut se déplacer dans un cylindre 46 sous l'effet du $\Delta\rho$ résultant du passage du débit liquide au travers de l'orifice 47 ; ce déplacement résultant du $\Delta\rho$ est compensé par l'écrasement d'un ressort 48 et est limité par la position d'un piston de vérin 42 se déplaçant dans le cylindre 46 et commandé par le dispositif 14. Ce déplacement du piston 45 provoque l'obturation progressive de rampes de trous 49 de section de plus en plus faible dans le sens de déplacement du piston 45. Ces trous 49 conduisent au retour basse pression réservoir par l'orifice 50 vers le conduit 16.

Le piston 45 assure avec le piston 42 l'étanchéité du conduit de circulation 4 par un siège 51. Le flasque 52 ferme d'un côté le cylindre 46 et comporte un siège 53 pour l'étanchéité du conduit 4 avec le piston 45.

Le flasque 54 ferme de l'autre côté le cylindre 46.

L'anti retour 55 permet la réalimentation en huile de la chambre 39 à partir du conduit 16 basse pression et par le conduit 41.

Le dimensionnement des pistons 38 et 42 doit être fait de façon à ce que le piston 38 commande le piston 42 à partir d'une certaine valeur de pression qui correspond à la pression obtenue véhicule à l'arrêt, moteur thermique arrêté, sur la plus forte pente possible en véhicule moteur, de façon à toujours conserver à la transmission hydrostatique son rôle immobilisateur du véhicule lorsque celui-ci est à l'arrêt et permettant ainsi la suppression du frein à main.

Le fonctionnement est le suivant :

Le dispositif 14 est monté à la sortie du récepteur 6 sur le conduit 4 et n'est en service qu'en marche avant. En marche arrière, le clapet obturateur 11 monté sur le conduit 41 ferme celui-ci, le piston 38 ne peut alors actionner le piston 42, sous l'effet de la pression génération marche arrière conduit 4, qui reste bloqué contre le piston 45 assurant l'étanchéité du conduit 4. En marche avant normale, la pression HP dans le conduit 5, la pression BP dans le conduit 4 maintiennent le piston 38 en position chambre 39 au maximum. Le piston 42 bloque le piston 45 et assure l'étanchéité du conduit 4.

En freinage marche avant, relâchement total de la pédale d'accélérateur, le rapport de transmission va évoluer suivant une loi assurant progressivement l'arrêt du véhicule et le rapport vers 0. Pendant cette évolution du rapport et cette décélération, le véhicule devient moteur, la pression HP conduit 4 et BP conduit 5. Le piston 38 se déplace, chasse l'huile de la chambre 39 et commande le déplacement du piston 42, libérant le piston 45. Celui-ci est alors soumis à l'action du $\Delta\rho$ résultant du débit du liquide à travers l'orifice 47. Selon le $\Delta\rho$, écrasement plus ou moins important du ressort 48 et débit de freinage à travers la rampe de trous 49, l'orifice 50 et le conduit 16 basse pression. S'il y a blocage de roue ou ralentissement trop important de l'une d'elle, le $\Delta\rho$ diminue ou s'annule, il y a écrasement moindre du ressort 48 et libération d'orifices 50 d'écoulement vers la basse pression et déblocage de roue.

L'action de ralentissement sera ainsi parfaitement contrôlée jusqu'à l'arrêt final, avec chute de pression dans le conduit 4, retour du piston 38 en position repos, fermeture du conduit 4 par l'action du piston 42 sur le piston 45 et blocage du véhicule, transmission en prise.

5

Les rampes de trous 49, leurs diamètres, leur nombre, leurs positions, le diamètre du cylindre 46, l'orifice 47 du piston 45 en longueur et diamètre, le ressort 48 définissent la loi de freinage du véhicule pour éviter le dérapage dans les conditions les plus difficiles.

Le freinage normal se fait uniquement en jouant sur le niveau du débit des groupes générateurs 2 et 3 commandé par le relachement de la pédale d'accélérateur, ce qui limite le fonctionnement frein moteur, permet la récupération d'énergie par l'accumulateur avec freinage amorti . Pour un freinage d'urgence ou de sécuritée, montage sur le conduit 4 d'un vérin obturateur de conduit et actionné par une pédale de frein comme pour les circuits de freinage classique, en faisant monter la pression dans le conduit 4 dans la portion de conduit non soumise à l'action de l'accumulateur 10.

De même, sur les engins tous terrains, peuvent être insérés dans le circuit hydraulique des systèmes permettant le blocage d'un roue consistant en deux vérins obturateurs de conduits, commandés par clapets 11 et assurant la fermeture des conduits arrivant et sortant du récepteur hydraulique 6 de commande de la roue 7. La commande de fermeture du conduit de retour par l'un des vérins ou des deux conduits par les deux vérins permet le blocage de la roue 7 et évite à celle-ci de tourner dans le vide et permet le report du couple sur les autres roues pour permettre le dégagement du véhicule.

Le dispositif 13 et le système 14 peuvent être montés pour être utilisés en marche arrière. La construction est alors symétrique de la construction marche avant, conduits 4 et 5 inversés, avec système 14 tel que représenté en pointillé Figure 1 Planche 1.

Les conduits 4 et 5 seront reliés par un conduit court-circuit fermé par robinet HP pour permettre le déplacement éventuel manuel du véhicule.

L'organisation de la transmission s'effectue autour de deux circuits, à savoir :

1-Circuit de Puissance : constitué par les générateurs 2 et 3 sortie du moteur thermique 1 et les récepteurs 6 sur les roues 7, reliés par les conduits 4 et 5, BP-HP réversible, le réservoir 9 et conduit 16 toujours BP, l'accumulateur 10 et conduit 17, toujours HP.

2-Circuit de Commande : conduit Basse Pression branché sur conduit 16, conduit Haute Pression branché sur conduit 17. Il comporte tous les dispositifs d'embrayage et de débrayage des étages de transmission, clapets 11, vérins 12, asservissement de la variabilité du générateur 3, électro clapet 28,....

Des dispositifs d'informations permettent de connaître les conditions de conduite :

-puissance disponible fournie par le moteur thermique : information donnée par un potentiomètre indiquant l'ouverture du papillon d'admission commandée par la pédale d'accélérateur,

-puissance absorbée par les conditions de déplacement du véhicule:

information de pression $p$ par les capteurs de pression 56 montés sur les conduits 4 et 5,

information de débit par la connaissance des cylin drées des étages récepteurs 6 embrayés sur les roues et par la vitesse de rotation des roues.

Puissance absorbée $P = \phi \times \bar{p}$

La microélectronique permet en comparant la puissance absorbée à la puissance disponible de gérer le rapport de transmission en allongeant ou en raccourcissant celui-ci pour adapter la valeur de la puissance absorbée à la puissance disponible commandée par le conducteur.

Cette opération sera réalisée soit :

en agissant sur la variabilité du débit du générateur récepteur 3 par une consigne modifiant l'angle d'inclinaison du barillet 23,

en agissant sur le changement d'étages de cylindrée de la partie générateur 2 ou récepteur 6 et sur la variabilité de cylindrée du générateur à débit variable 3 par une consigne de changement de rapport et une consigne modifiant l'angle d'inclinaison du barillet 23.

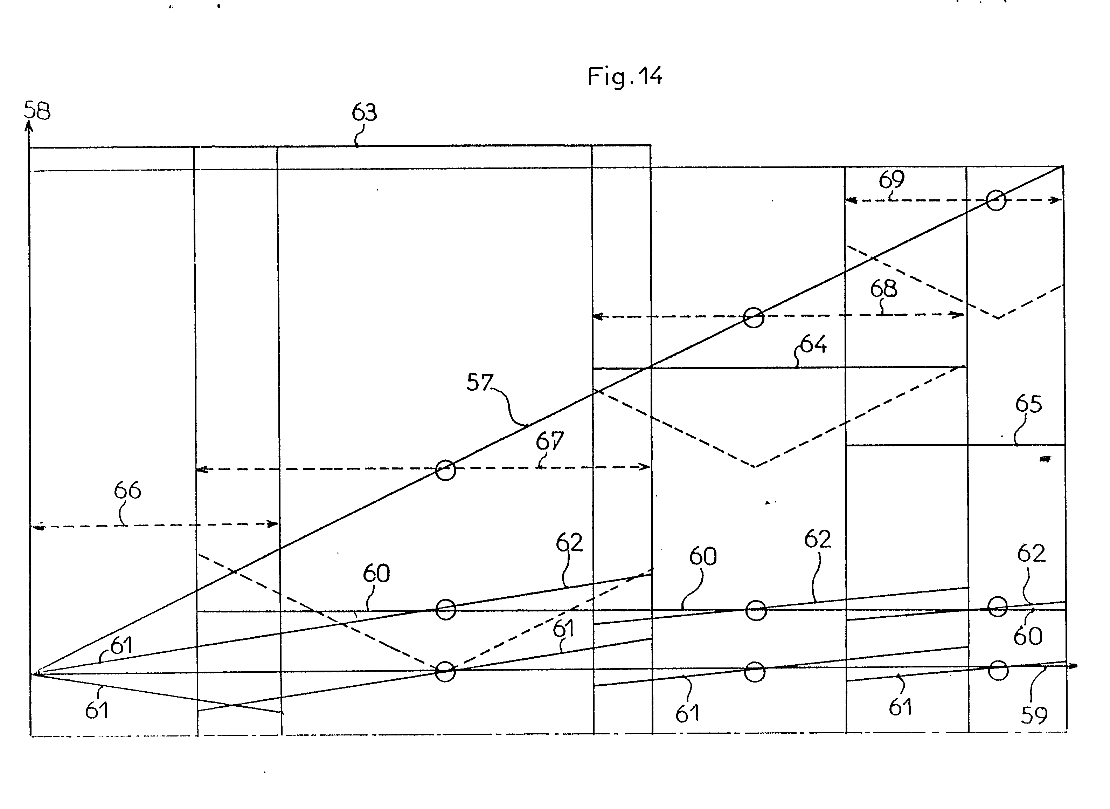

La gestion complète du rapport de transmission K se fera selon graphiques de la Figure 14.

L'établissement du rapport de transmission K s'effectue ainsi :

soient V1, V2, V3... Vn les cylindrées fixes des étages générateurs 2 à la sortie du moteur thermique obtenues soit par la cylindrée d'un étage, soit par la combinaison de plusieurs étages,

soit $\alpha\phi$ le débit variable délivré par le générateur 3, $\alpha\phi$ pouvant être positif ou négatif pour le même orifice de sortie.

Les cylindrées totales possibles seront donc :

V1 + $\alpha\phi$ , V2 + $\alpha\phi$ , V3 + $\alpha\phi$ .... Vn + $\alpha\phi$

soit W1, W2, W3,... Wn les cylindrées fixes des étages récepteurs 6 entraînant les roues du véhicule, obtenues soit par la valeur d'un étage (deux roues motrices), soit par la combinaison de 2, 3,... n étages (4, 6,... 2n roues motrices).

Le rapport de transmission K pourra prendre les valeurs K1, K2, K3,... Kn que pourront offrir les rapports fixes $\frac{V}{W}$ de toutes les combinaisons possibles des étages de cylindrées fixes V et W et la continuité entre ces rapports sera assurée par la variabilité $\frac{d\varphi}{W}$ apportée par le générateur 3, l'ensemble donnant pour le rapport K la valeur $\frac{V + d\varphi}{W}$

La courbe caractéristique du rapport $K = \frac{V + d\varphi}{W} = \phi$ (N), N étant la vitesse du véhicule, pour un régime de déplacement donné ( plat, côte, descente) constant, résultera de l'adaptation permanente de ce rapport K pour obtenir à chaque instant l'égalité entre la puissance disponible et la puissance utilisée. Cette courbe pour une régime constant donné permet de décrire la gestion du rapport K de la transmission.

Le graphique de la Figure 14 permet de voir comment se réalise la variation du rapport K selon courbe $K = \phi$ (N) pour un régime de déplacement donné permettant d'utiliser tous les rapports dans le cas d'une transmission à un étage générateur à cylindrée fixe 2 plus l'étage générateur à cylindrée variable 3 et trois étages récepteurs à cylindrée fixe 6.

| ETAGES GENERATEURS | COURBES |
|---|---|
| Cylindrée fixe sur générateur 2 : V | 60 |
| Cylindrée variable générateur 3 : $d\varphi$ | 61 |
| TOTAL générateur $V + d\varphi$ | 62 |
| ETAGES RECEPTEURS | COURBES |
| Cylindrée fixe sur récepteur 6 : W1 = W2 + W3 | 63 |
| Cylindrée fixe sur récepteur 6 : W2 | 64 |
| Cylindrée fixe sur récepteur 6 : W3 | 65 |

Les cylindrées fixes définissent quatre zones de rapports fixes :

Courbe 59

Zone 66 : rapport fixe 0 ─────────

Courbe 63
Courbe 60

Zone 67 : rapport fixe $\frac{V}{W2 + W3} = K1 = $ ─────────

Courbe 63
Courbe 60

Zone 68 : rapport fixe $\frac{V}{W2} = K2 = $ ─────────

Courbe 64
Courbe 60

Zone 69 : rapport fixe $\frac{V}{W3} = K3 = $ ─────────

Courbe 65

Les cylindrées fixes plus la cylindrée variable permettent de définir la courbe 57 $K = \phi$ (N) déduite des rapports suivants :

| RAPPORT FIXE | | RAPPORT K |
| --- | --- | --- |
| | | Courbe 61 |
| Zone 66 | 0 | |
| | | Courbe 63 |
| | | Courbe 62 |
| Zone 67 | K1 | |
| | | Courbe 63 |
| | | Courbe 62 |
| Zone 68 | K2 | |
| | | Courbe 64 |
| | | Courbe 62 |
| Zone 69 | K3 | |
| | | Courbe 65 |

La courbe 61, de part et d'autre de l'abscisse 59 du fait de la possibilité du générateur récepteur 3 à débit variable d'offrir une réversibilité totale générateur récepteur pour ses deux orifices de sortie et pour un même sens de rotation, donne le rapport et fonctionnement en démarrage MARCHE AVANT et démarrage MARCHE ARRIERE.

La continuité du rapport $K = f$ (N) est ainsi établie pour toutes les vitesses avec un recouvrement possible entre les différentes zones d'obtention du rapport de façon à éviter les changements fréquents de rapport fixe pour les régimes de déplacement donnant des rapports à la limite des deux zones.

L'organisation des rapports fixes devra être réalisée de façon à réduire, au fur et à mesure de la montée en pression, l'importance de la zone étage fixe de manière à réduire l'angle de la partie variable du générateur à débit variable et à faire travailler celui-ci au voisinage de l'angle 0 aux plus hautes pressions, ce qui est illustré en partie par le graphique de la Figure 14. Cette disposition permet donc une transmission hydrostatique fonctionnant à haute et très haute pression, d'une part par les pressions permises par le générateur récepteur à cylindrée fixe objet du brevet Français N° 84-08-607 du 22 mai 1984 à équilibrage hydrostatique intégral et d'autre part par la variabilité obtenue par un générateur récepteur à débit variable fonctionnant aux très hautes pressions au voisinage de la valeur 0 de l'angle d'inclinaison de la variabilité.

La variation du rapport se fera à partir des informations suivantes :

-connaissance du rapport fixe : étages enclenchés,

-connaissance du rapport variable : potentiomètre,

-connaissance de la vitesse du véhicule : compte-tour,

-connaissance de la pression : capteur de pression,

-connaissance du rendement de la transmission,

-connaissance de la puissance disponible : potentiomètre.

L'automatisation par l'électronique peut :

-soit être réduite avec déclenchement par le conducteur du passage d'une zone à la suivante,

-soit être totale avec déclenchement automatique du passage d'une zone à la suivante.

Cette transmission peut être allégée encore par l'utilisation du plastique, en particulier dans le circuit de commande pour toutes les pièces ne subissant pas de gros efforts mécaniques, pratiquement tous les pistons de vérin dont seule l'enveloppe extérieure supportant la pression et les flasques seront en acier.

Le nombre de rapports fixes, c'est-à-dire la complexité de la transmission hydrostatique sera évidemment fonction de la puissance à transmettre :

-pour les véhicules de faible puissance, un seul rapport fixe c'est-à-dire un étage générateur à cylindrée fixe, un étage générateur à cylindrée variable,un étage récepteur à cylindrée fixe,

-pour les véhicules de moyenne puissance, deux rapports fixes, c'est-à-dire deux étages générateurs à cylindrée fixe, un étage générateur à cylindrée variable, un étage récepteur à cylindrée fixe,

-pour les véhicules de plus forte puissance, 3, 4.... n rapports fixes avec toutes les combinaisons possibles selon la destination du véhicule.

## Revendications

1 - Transmission hydrostatique de puissance pour véhicule automobile, caractérisée en ce qu'elle comporte des dispositifs d'information et d'une part un circuit de puissance proprement dit, d'autre part un circuit de commande pour l'automatisation de la transmission, à savoir :

A) Le circuit de puissance comprend :

-un ensemble générateur de puissance constitué par une partie à cylindrée fixe 2 à un ou plusieurs étages possibles V1, V2, V3,... Vn de cylindrée fixe et une partie à cylindrée variable 3 totalement réversible "générateur-moteur" pour un même sens de rotation,

-un ensemble récepteur de puissance constitué par des récepteurs à cylindrée fixe 6 attaquant chacun respectivement par train chacune des roue 7, à un ou plusieurs étages possibles W1, W2, W3,... Wn de cylindrée fixe et pouvant conduire à une transmission à 2, à 4,... à 2n, à 2, 4,... 2 n roues motrices,

-des liaisons entre l'ensemble générateur et l'ensemble récepteur par des conduits d'alimentation 5 et de retour 4 en marche avant, et alimentation 4 et retour 5 en marche arrière,

-un réservoir hydraulique 9 et le conduit 16 toujours Basse Pression,

-un accumulateur hydraulique 10 et le conduit 17 toujours à Haute Pression,

-un dispositif de freinage 14 complété par un système anti-blocage de roue 14,

-un dispositif de surpression 15.

B) Le circuit de commande, piloté par l'électronique, est branché sur les conduits 16 basse pression et 17 haute pression avec réduction éventuelle de celle-ci et dans ce cas avec accumulateur incorporé, alors qu'il comprend tous les organes de commande de variation du rapport de transmission.

C) L'ensemble est complété par des dispositifs d'information :

-capteurs de pression 56 sur conduits 4 et 5,

-potentiomètre sur ouverture du papillon de puissance du moteur thermique,

-potentiomètre sur sur variabilité du générateur à débit variable

-compte-tours pour débit,

-information d'étages enclenchés définissant le rapport fixe et le débit.

2 - Transmission hydrostatique de puissance suivant la revendication 1, caractérisée en ce qu'elle comporte :

-un ou des étages générateurs 2 de cylindrée fixe V1, V2, V3,... Vn et un ou des étages récepteurs 6 de cylindrée fixe par train W1, W2, W3,... W n dont la combinaison permet la variation étagée de la partie fixe du rapport de transmission.

-un étage générateur de cylindrée variable 3 et récepteur permettant le démarrage MARCHE AVANT, la MARCHE ARRIERE, la variabilité du rapport de transmission K entre les parties fixes du rapport de transmission

3 - Transmission hydrostatique de puissance suivant la revendication 1, caractérisée en ce que l'étage "générateur-récepteur" 3 assurant la variabilité du rapport de transmission entre les valeurs fixes de celui-ci est un générateur récepteur à débit variable dont la variation de débit s'exerce de part et d'autre d'un point 0 de débit nul depuis une valeur négative $-\alpha\phi$ variable, (travail en récepteur), jusqu'à une valeur positive $+\alpha\phi$ variable, (travail en générateur, ce générateur-récepteur 3 à débit variable permettant :

-la variabilité entre les étages en se comportant dans la zone d'un étage, en récepteur alimenté conduit 5 pour les rapports inférieurs au rapport fixe de l'étage, en générateur conduit 5 pour les rapports supérieurs au rapport fixe de l'étage,

-des étages fixes générateurs 2 bloqués et débrayés, en générateur conduit 5 la MARCHE AVANT démarrage, en générateur conduit 4 la MARCHE ARRIERE.

4 - Transmission hydrostatique de puissance suivant la revendication 1, caractérisée en ce qu'elle comporte :

-un réservoir hydraulique 9 et le conduit 16 toujours BP,

-un accumulateur hydraulique 10 et le conduit 17 toujours HP,

-un clapet préférentiel 32 de sélection du conduit basse pression 4 ou 5 sur le conduit 16,

-un clapet 35 d'isolement de l'accumulateur 10 du conduit 5 lorsque la pression de celui-ci tombe en dessous d'une certaine valeur

-un clapet anti-retour 37 permettant la récupération d'énergie par l'accumulateur 10 lorsque le conduit 4 est en haute pression lors du ralentissement ou du fonctionnement en frein moteur et la non restitution de cette énergie lorsque la pression dans le conduit 4 est plus faible que celle de l'accumulateur.

5 - Transmission hydrostatique de puissance suivant la revendication 1 caractérisée en ce qu'elle comporte un dispositif de commande anti-blocage des roues 13 et un système anti-blocage de roue 14, à savoir :

A-Le dispositif de commande 13 comprend un vérin matérialisé par un piston 38 muni d'un ressort antagoniste 40, recevant la pression hydraulique du conduit 4 sur sa plus grande surface et la pression hydraulique du conduit 5 sur sa plus petite surface et se déplaçant sous l'effet de ces différentes forces pour commander par l'huile d'une chamber 39 et par l'intermédiaire d'un conduit 41, un vérin 42 permettant la libération du système anti-blocage de roue 14.

B - Le système anti-blocage de roue 14 a sa mise en service commandée par un piston 42 actionné par le dispositif 13 et comprend un piston 43 se déplaçant dans un cylindre 46 sous l'effet d'un$\Delta\rho$ résultant du débit d'huile à travers l'orifice 47 du piston 43 et donc le déplacement est amorti par un ressort antagoniste 48 s'opposant au déplacement résultant du$\Delta\rho$, si bien que le déplacement d'une part du piston 42, d'autre part du piston 43 permet un échappement plus ou moins important de l'huile du conduit 4 sous pression de ralentissement vers le réservoir Basse Pression 9 par le conduit 16, par des rampes d'orifices 49 selon l'intensité du ralentissement commandée par le retrait de la pédale d'accélérateur et la vitesse du véhicule.

6 - Transmission hydrostatique suivant la revendication 5, caractérisée en ce que le système de blocage ou freinage de roue consiste en vérins obturateurs de conduit de part et d'autre d'un récepteur 6 de roue 7 ou d'un couple de récepteurs 6 de roues 7, commandés par des clapets 11 permettant le blocage ou le freinage de la roue 7 ou du couple de roues 7.

7 - Transmission hydrostatique de puissance suivant la revendication 1, caractérisée en ce qu'elle comporte un circuit de commande monté en dérivation sur les conduits Basse Pression 16 et Haute Pression 17 avec éventuellement un petit accumulateur hydraulique incorporé et anti-retour sur circuit 17 pour permettre la commande :

-par servo-valve ou valve à action proportionnelle du vérin 17 de variabilité du générateur 3,

-par électro-clap[et 28, des clapets 11 et des vérins 12 de sélection des étages fixes Générateur 2 et Récepteur 6.

Fig1

Fig 2

Fig 3

Fig.4

Fig.5

Fig.6

Fig 7

Fig 8

Fig 9

Fig.10

Fig.11

Fig.12

Fig 13

Fig.14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 900 075  (CHICHESTER)<br>* Colonnes 2-7; figures * | 1,2 | F 16 H  39/48 //<br>F 16 H  39/50 |
| | --- | | |
| A | DE-A-2 555 716  (BOSCH)<br>* Pages 5,6; figures * | 1-3 | |
| | --- | | |
| A | US-A-3 038 312  (MARSH)<br>* Colonnes 4-14; figures * | 1-3 | |
| | --- | | |
| A | FR-A-2 199 836  (PELTIER) | | |
| | --- | | |
| A | US-A-4 191 018  (BARRETT) | | |
| | --- | | |
| A | GB-A-1 437 591  (CLARK) | | **DOMAINES TECHNIQUES RECHERCHES (Int. Cl.4)** |
| | --- | | F 16 H  39/00 |
| A | US-A-3 438 201  (NASH) | | |
| | ----- | | |

Le présent rapport de recherche a été établi pour toutes les revendications

| Lieu de la recherche | Date d'achèvement de la recherche | Examinateur |
|---|---|---|
| LA HAYE | 10-12-1986 | FLORES |